# FASCICULE DE BREVET EUROPEEN

(11) **EP 1 662 161 B1**
(45) Date de publication et mention de la délivrance du brevet: **23.03.2011**
(21) Numéro de dépôt: 05292358.8
(22) Date de dépôt: 08.11.2005
(51) Int. Cl.: F16D 3/68

(54) **Poulie d'organe de transmission de puissance, alterno-démarreur séparé équipé d'une telle poulie et système d'entrainement de moteur thermique**
Riemenscheibe zur Kraftübertragung, Starter-Generator ausgerüstet mit so einer Riemenscheibe und Antriebssystem eines Verbrennungsmotors
Pulley for power transmission, starter-alternator and drive-system of a motor

(30) Priorité: 24.11.2004 FR 0412479
(43) Date de publication de la demande: 31.05.2006
(73) Titulaire: HUTCHINSON, 75008 Paris (FR)
(72) Inventeur: Kamdem, Henri, 37400 Amboise (FR)
(74) Mandataire: Schwartz, Thierry J.

(56) Documents cités:
- EP-A- 0 012 669
- EP-A- 1 378 677
- DE-A1- 4 309 745
- US-A- 4 307 584
- US-A- 5 788 576
- US-A- 2004 014 540

## Description

L'invention se rapporte à un altérno-démarreur séparé du vilebrequin d'un véhicule automobile comme révélé dans EP 0012669 A et correspondant au préambule de la revendication 1.

Le domaine concerné est celui de la transmission de puissance et vise plus particulièrement, mais non exclusivement, les systèmes d'entraînement réversible de moteur thermique de véhicule automobile, notamment entre un vilebrequin et un alterno-démarreur reliés par courroie. La poulie peut avantageusement équiper également d'autres organes de la chaîne cinématique d'entraînement, notamment des organes non réversibles : compresseur, pompe à eau, etc.

L'invention peut également s'appliquer dans tous les domaines qui nécessitent de la transmission de puissance par des machines tournantes ou des moteurs, par exemple dans des installations industrielles.

Il est connu d'intégrer la fonction démarreur d'un moteur thermique sur l'alternateur, appelé alors alterno - démarreur. Cette intégration permet de supprimer le démarreur, couronne dentée lourde couplée à un volant de forte inertie et au démarreur électrique.

L'alterno-démarreur sert à la fois de moteur, pour réaliser le démarrage du moteur thermique à travers un lien souple et la poulie de vilebrequin se comportant comme un frein, puis de récepteur une fois le moteur démarré afin notamment de recharger la batterie.

L'intégration peut se faire soit par couplage direct de l'alternateur monté sur l'arbre de vilebrequin, appelé alors Alterno - Démarreur Intégré (A.D.I.), soit par un Alterno - Démarreur dans une transmission par courroie (en remplacement de l'alternateur classique), appelé Alterno - Démarreur Séparé (A.D.S.).

Dans la solution séparée (A.D.S.), l'entraînement par courroie entre les deux organes, vilebrequin et alternateur, permet une grande adaptabilité au montage et un démarrage feutré. La courroie est de type poly-V, crantée ou trapézoïdale. La présente invention appartient à cette deuxième catégorie.

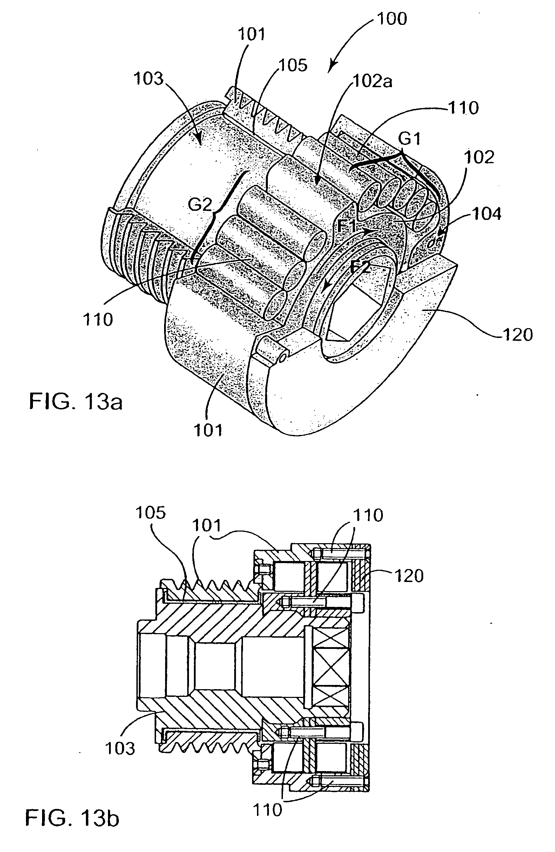

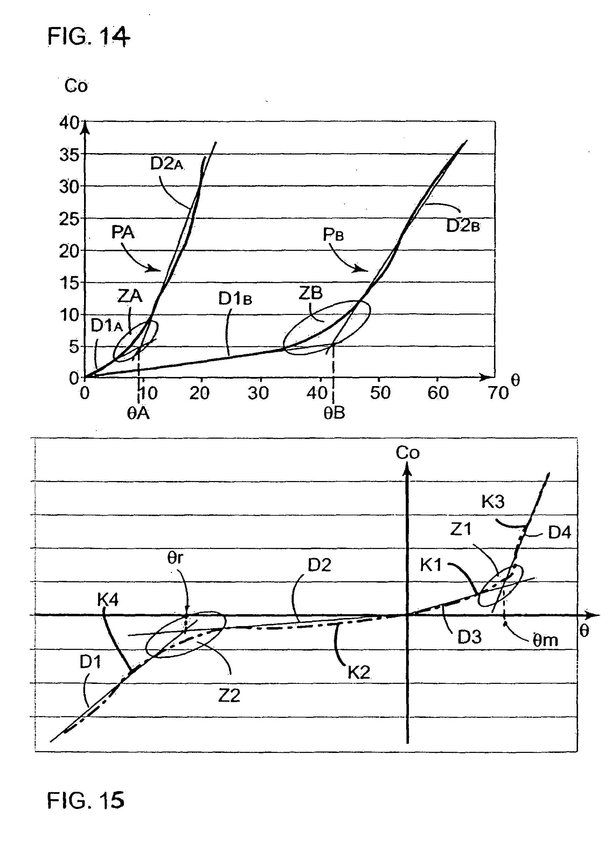

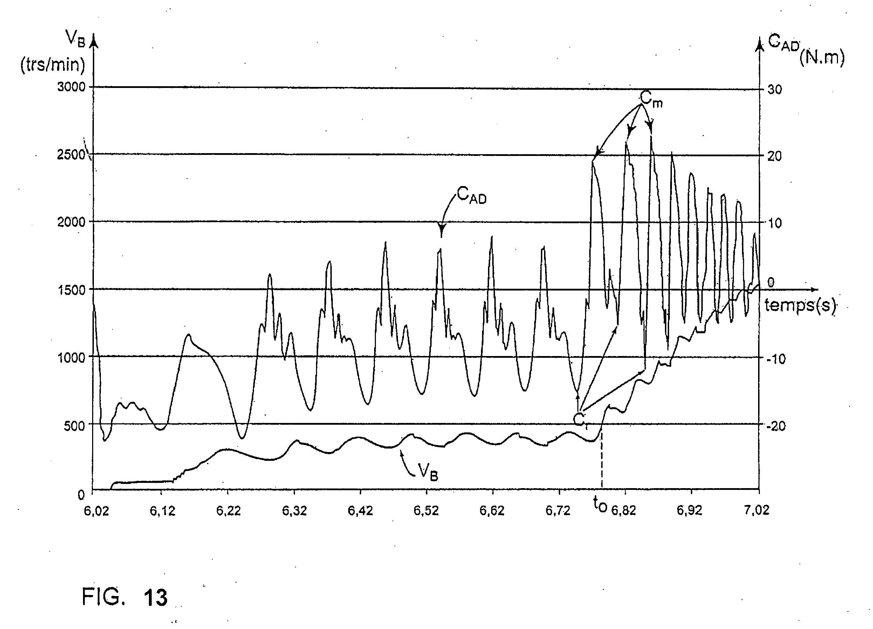

Mais la mise en route d'un moteur thermique est un phénomène dynamique brutal qui fluctue rapidement en fonction des frottements internes, variables selon l'état de l'embiellage et des mises en compression successives. Comme illustré sur les diagrammes temporels de la figure **13**, dans cette phase de démarrage à forte sollicitation, la vitesse du vilebrequin V_{B} augmente brusquement (à un instant t₀ de quelques secondes) et le couple vilebrequin varie de résistant à moteur. Dans ces conditions, le couple de l'alterno-démarreur C_{AD} fluctue lui-même, respectivement, entre moteur (pics positifs Cₘ) et résistant (pics négatifs Cᵣ).

Après le démarrage, en régime dit « démarré », le vilebrequin devient moteur et l'alterno-démarreur récepteur. Dans son fonctionnement, la vitesse instantanée du vilebrequin fluctue alors sensiblement de manière sinusoïdale : c'est le phénomène connu d'acyclisme moteur. Ces fluctuations de vitesse sont transmises par la courroie aux organes récepteurs, tels qu'alternateur, compresseur, pompe à eau.

Sur l'alterno-démarreur, les inerties étant élevées, les couples dynamiques alors générés sont de fortes amplitudes, en alternance positives et négatives malgré la rotation en un seul sens : ces couples génèrent des variations de tension importantes, avec des niveaux de tensions maximales de fortes sollicitations pour les composants (courroies, tendeurs de roulement d'organe ou enrouleurs) et de tensions minimales faibles pouvant provoquer un mauvais entraînement (glissement) et du bruit.

En régime démarrage du moteur, le couple résistant sur le vilebrequin peut atteindre des valeurs de l'ordre de 90 Nm mais également des valeurs nettement supérieures, jusqu'à 150 à 180 N.m. Or, une poulie découpleuse classique montée sur alternateur n'est capable de délivrer typiquement qu'un couple moteur de l'ordre de 30 N.m au maximum, ce qui permet de délivrer un couple sur le vilebrequin de 90 N.m avec un rapport de réduction typiquement de 3 entre les deux organes.

En particulier lorsque des couples nettement supérieurs doivent être fournis sur le vilebrequin, les variations de couple sont importantes et les à-coups provoquent alors des glissements et des vibrations dans la transmission par l'intermédiaire de la courroie.

Il convient également d'observer que les valeurs positives et négatives de couples ne sont nécessairement symétriques, du fait des asymétries des effets d'amortissement (par frottement) et de dissymétries mécaniques dans les mouvements, tant en régime démarrage que démarré.

Pour absorber les variations dynamiques en mode démarré, il est connu d'utiliser des roues libres, comme décrites dans les documents de brevet US 5,676,225, US 6,093,991 ou US 6,237,736, ou des roues libres élastiques, telles que celles des documents US 6,083,130 ou EP 0 517 184. Les systèmes à roue libre ou roue libre élastique sont par principe totalement incompatibles avec une utilisation réversible, par exemple sur une poulie d'alterno-démarreur pour entraîner un vilebrequin, à cause du changement de sens de couple.

Il existe également des poulies découpleuses équipées d'un anneau élastomère, dont la raideur conditionne une déformation angulaire. Elles permettent d'absorber les irrégularités de vitesse ou de couple et sont donc essentiellement dédiées au filtrage en régime de fonctionnement aux bas régimes du vilebrequin.

L'invention vise à résoudre les problèmes évoqués, et en particulier à réaliser un système qui puisse, en phase de démarrage, filtrer les à-coups de couples et limiter les variations de tension, ainsi que le risque de générer des tensions trop basses provoquant glissement et bruit, tout en assurant un découplage efficace en régime démarré.

Pour ce faire, l'invention exploite en particulier l'élasticité des découpleuses pour satisfaire à ce double objectif.

Plus précisément, l'invention a pour objet un alterno-démarreur selon les caractéristiques de la revendication 1.

Typiquement, la plage de raideurs d'un tel ensemble de découplage s'étend entre 0,2 et 4 N.m/degré.

Selon des modes de réalisation particuliers, l'élément découpleur est une couronne en élastomère adhérisée directement ou par l'intermédiaire d'un insert, un ressort de torsion ou un ressort hélicoïdal, ou l'un au moins de ces éléments associés à deux roues libres montées en opposition.

La couronne élastique est en matériau de type caoutchouc, de préférence: de la silicone, un HNBR (hydrogéno-nitryl-butadiène), du chloroprène, un EPDM (éthylène-propylène-diène), un BR (butadiène caoutchouc), un NR (nitrile caoutchouc) ou une combinaison de deux ou au moins de ces composés. L'élément découpleur peut être également un ressort en torsion à lame d'acier ou un ressort d'acier hélicoïdal. Cette diversité de matériaux permet d'adapter la raideur à tout système de transmission.

L'ensemble élastique fournit deux valeurs de raideur, que ce soit en phase moteur ou en phase récepteur, c'est-à-dire que l'organe génère ou reçoit un couple moteur, une première valeur de base apportée par l'élément découpleur élastique actif, à laquelle s'ajoute, au-delà d'un angle de débattement préréglé, une raideur supplémentaire apportée par au moins un limiteur de débattement à deux composantes : un plateau central, solidaire d'une face externe du moyeu central, couplé à des butées élastiques régulièrement disposées, en périphérie, sur une face interne de la jante, les butées et le limiteur étant conformés pour venir en contact déformant.

Selon des modes de réalisation particuliers :
- le plateau central est en forme de polygone régulier, de préférence à quatre côtés, et les butées angulaires sont prismatiques en matériau élastique présentant deux faces principales de contact et une face d'adhésion à la jante ;
- le plateau central est annulaire et présente une couche périphérique d'un matériau élastique présentant des avancées venant en contact des butées périphériques ;
- les butées sont formées à partir d'un ressort à lame périphérique intégré à la jante et présentant des avancées centripètes régulièrement réparties, ou bien ces butées sont des ressorts à lame.

Selon d'autres modes de réalisation particuliers, l'invention permet de mettre en oeuvre des raideurs adaptées au système en faisant intervenir une combinaison adaptée de deux raideurs spécifiques pour chaque sens de couple, obtenue par l'association :
- d'un élément élastique spécifique de base dans une plage centrale de déformations positives et négatives pour respectivement chaque sens de couple, en régime démarrage ou démarré, et dans des intervalles situés au-delà de la plage centrale en régime de démarrage, et
- d'un limiteur de débattement spécifique dans chacun desdits intervalles de déformations positives et négatives pour respectivement chaque sens de couple, propre au régime de démarrage.

Il apparaît en effet que le système ne réagit pas généralement de manière identique selon le sens du couple appliqué, sens moteur ou récepteur, les pièces et leur agencement ne présentant pas obligatoirement de symétrie dynamique, notamment en termes de déformation des matériaux et de transmission des couples. L'invention permet alors de s'adapter à cette dissymétrie de comportement par la variation de raideur mise en oeuvre.

Les modes de réalisation de limiteurs dits dissymétriques, adaptés à cette différenciation de comportement, reprennent les précédents avec des butées angulaires et/ou des avancées du plateau angulaire présentant une différence de densité, module ou forme suivant la face de contact, de sorte que le contact déformant obtenu selon la face soit de raideur adaptée au sens de couple correspondant.

De plus, une répartition optimisée des états de raideur correspondant aux régimes démarrage et démarré de chaque sens de couple est réalisée afin de prévoir des déformations angulaires adaptées au système. Cette répartition est définie par le réglage de la position à l'état libre des avancées du plateau qui forme, avec chaque butée de contact correspondant au sens moteur ou récepteur de ces avancées, un angle préréglé de seuil de changement de régime démarrage/démarré.

Selon des formes de réalisation préférées :
- chaque butée est constituée de deux demi-butées de matériaux ayant des modules ou des formes différentes ;
- chaque butée possède un toron de matériau rigide ou de plus haute densité que le matériau élastique du reste de la butée, le toron étant disposé plus près d'une face de contact que de l'autre ;
- une languette en matériau élastique est insérée entre la jante et une partie d'une butée en forme d'avancée d'un ressort annulaire à lame.

Afin d'adapter les états de raideur au système auquel ils s'appliquent, il est avantageux de différencier également les raideurs dans la gamme de déformations de base en fonction du sens des couples moteur et récepteur. Pour ce faire : la poulie possédant deux éléments découpleurs élastiques de base de raideurs différentes, l'un au moins de ces éléments est associé à un limiteur de débattement de type dissymétrique adapté en raideur selon le sens et chaque association est montée sur une roue libre, les deux roues libres étant en opposition de manière à définir une valeur de raideur adaptée à chaque sens;

Dans des applications particulières, au moins un limiteur de débattement décrit ci-dessus peut être calculé en raideur pour assurer seul, c'est-à-dire sans élément de découplage ou avec un élément de découplage débrayé, un amortissement efficace en régime démarrage et un découplage suffisant en régime démarré.

Les solutions précédentes sont particulièrement adaptées pour des applications sur organes réversibles, ou non réversibles, avec des couples de résistance au vilebrequin pouvant atteindre des valeurs sensiblement supérieures, par exemple entre 90 et 150 à 180 N.m, ce qui implique la mise en oeuvre de raideurs de valeurs supérieures.

Dans des applications concernant des organes de type réversible où l'organe moteur devrait fournir un couple limité sur l'organe récepteur, par exemple limité à environ 90 N.m, la raideur calibrée pour permettre un découplage efficace en régime démarré tout en autorisant un couple moteur suffisant avec un amortissement en régime démarrage, peut être fournie par un ensemble élastique comportant au moins l'élément élastique de découplage présenté ci-dessus mais non associé à un limiteur de débattement ou associé à un limiteur une fois débrayé.

Une telle valeur de couple de 30 N.m correspond bien, avec un rapport de réduction classique de 2,5 à 3 entre les diamètres du vilebrequin et de l'alternateur, à un couple de démarrage du vilebrequin pouvant aller jusqu'à 90 N.m et une raideur jusqu'à environ 2N.m/°.

L'organe réversible peut être en particulier l'alternateur et le vilebrequin : lorsque la poulie de l'alternateur est en mode moteur, la poulie du vilebrequin est en mode récepteur et *vice versa.*

Dans un mode de réalisation particulier, l'ensemble élastique comporte un élément élastique montée sur une première roue libre associée à une seconde roue libre montée entre la jante et le moyeu, en opposition avec la première roue libre.

L'invention est détaillée ci-après de manière non limitative par une description d'exemples de réalisation, en référence aux figures annexées qui représentent respectivement :
- la figure 1, un schéma général en vue supérieure de l'implantation d'un alterno-démarreur séparé dans la chaîne d'entraînement d'un véhicule automobile à moteur thermique ;
- la figure 2, une vue partielle en coupe d'un premier exemple de poulie à élément annulaire en matériau élastique pour alternateur réversible séparé selon l'invention ;
- les figures 3a et 3b, des vues en coupes longitudinale et transversale selon A - A et B - B, d'un exemple de poulie à ressort de torsion pour alternateur réversible selon l'invention ;
- la figure 4, une vue en coupe partiellement arrachée d'un exemple de poulie à ressort hélico'idal pour alternateur réversible selon l'invention ;
- les figues 5a et 5b, une vue éclatée et une vue en coupe longitudinale d'une poulie à élément élastique de base en forme de couronne, additionnée d'un limiteur de débattement à butées élastiques pour apporter un surplus de raideur en mode démarrage ;
- la figure 6, un diagramme couple / déformation angulaire d'une poulie selon l'invention pour organe réversible, dans le cas le plus général où chaque régime (démarrage et démarré) de chaque mode (moteur et récepteur) présente une raideur spécifique ;
- les figures 7a à 7d, une variante de poulie selon les figures 5a et 5b, en vues perspective (figure 7a) et en coupe transversale partielle selon différentes positions relatives du plateau central par rapport aux butées (figures 7b à 7d), dans le cas de butées en matériau de densité différenciée, pour permettre une répartition de raideur en régimes démarrage/démarré selon le mode de fonctionnement, moteur ou récepteur ;
- les figures 8a à 8c, des vues en coupe transversale partielle pour différentes positions relatives d'un limiteur de débattement comportant un plateau central de forme carrée et des butées périphériques élastiques formées à partir d'un ressort périphérique, une partie de ces butées étant renforcée en raideur pour permettre un fonctionnement adapté aux deux sens de couples appliqués ;
- les figures 9a à 9e, des vues en coupe transversale partielle de trois autres variantes de limiteurs de débattement (dont l'une est illustrées par trois positions relatives plateau/butées selon les figures 9b à 9d) permettant d'assurer l'adaptation en raideur des modes de fonctionnement moteur/récepteur ;
- les figures 10a à 10d, des vues en coupe longitudinale de poulies selon l'invention avec différentes implantations de l'élément élastique de base et du limiteur de débattement ;
- la figure 11, une vue en coupe longitudinale d'un exemple de poulie selon l'invention à deux couronnes élastiques associées à deux limiteurs et montées sur deux roues libres en opposition ;
- les figures 12a et 12b, des variantes de la précédente sans limiteur de débattement ;
- la figure 13 (déjà commentée), des diagrammes temporels de la vitesse du vilebrequin V_{B} et des fluctuations du couple de l'alterno-démarreur.

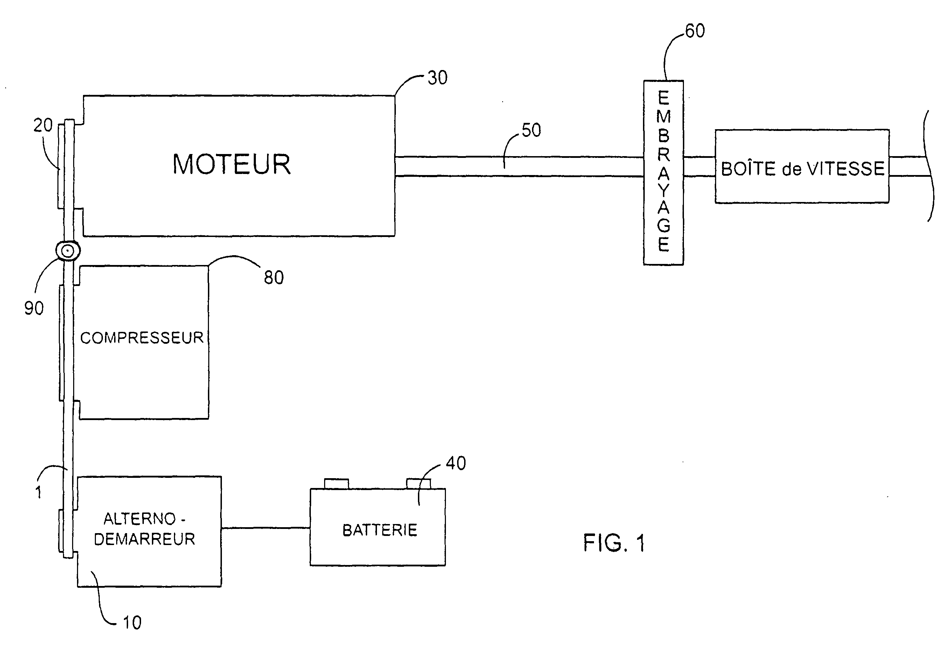

Comme illustré schématiquement en figure 1, un alterno-démarreur séparé 10 est implanté dans la chaîne d'entraînement des roues d'un véhicule automobile, par couplage au vilebrequin 20 du moteur thermique 30 à l'aide d'une courroie d'entraînement 1. L'alternateur 10 est par ailleurs relié électriquement à la batterie 40. Le moteur 30 entraîne les roues motrices par l'intermédiaire d'un arbre de transmission 50 dont le couple moteur est réglé par un embrayage 60, ce dernier étant couplé à une boîte de vitesse 70.

La courroie entraîne également en général un compresseur de climatisation 80 lorsqu'il est embrayé. Un tendeur 90 permet de conserver la tension de la courroie 1. La poulie selon l'invention est utilisée sur l'ensemble alternateur / vilebrequin, et avantageusement sur le compresseur.

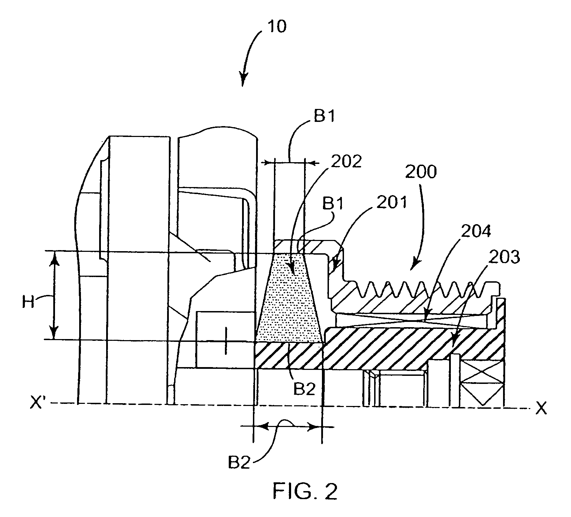

La figure 2 présente la vue en coupe, simplifiée par abstraction de la partie symétrique autour de X'X, d'un premier exemple de poulie 200 selon l'invention à couronne annulaire en matériau caoutchouc, pour un alternateur réversible séparé 10. La poulie 200 comporte une jante périphérique 201, la couronne annulaire de découplage 202, et un moyeu interne 203. La jante et le moyeu sont en métal et montés sur palier 204 de roulement.

La couronne 202 est localisée entre le moyeu 203 et la jante 201 sur laquelle une courroie d'entraînement (non représentée) se positionne. Ce découpleur est dimensionné en matériau et en profil, en particulier bases B1, B2 et hauteur H du type profilé en trapèze, pour une raideur d'environ 1 N.m/degré, induisant des déformations angulaires de l'ordre de 30 degrés au maximum.

Dans ces conditions, le couple développé par l'alterno-démarreur en mode moteur, au démarrage, est au maximum d'environ 30 N.m. Ceci permet un démarrage correct (en termes de temps de réponse de couple par amortissement des efforts) lorsque l'application n'est pas trop sévère, c'est-à-dire pour des couples résistants du vilebrequin d'environ 75 à 90 N.m, pour un rapport de réduction de 3 par exemple entre les diamètres du vilebrequin et de l'alternateur.

Le découplage en mode démarré reste efficace car le découplage reste la fonction de base d'une telle couronne, la raideur pouvant demeurer suffisamment faible.

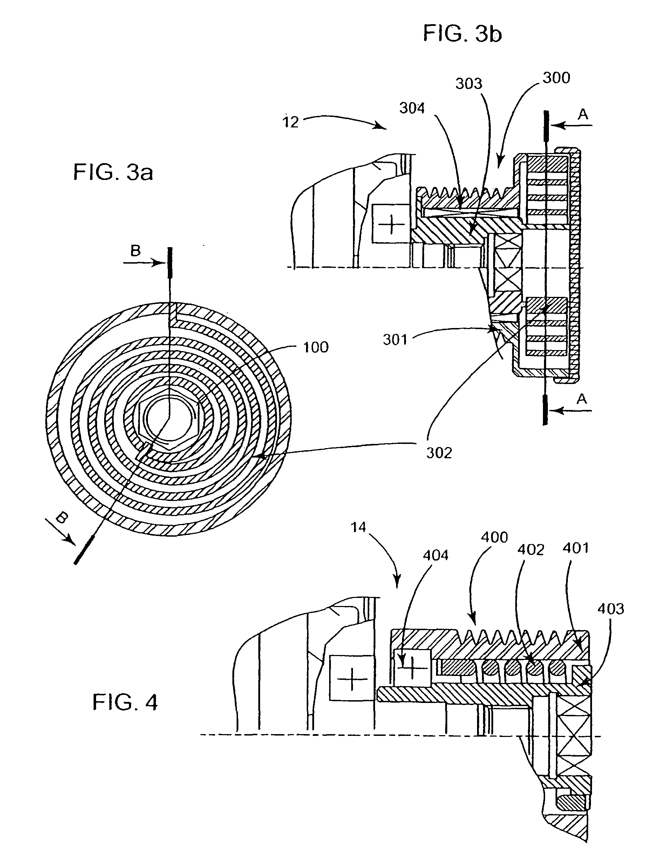

Les figures 3a et 3b illustrent des vues en coupe longitudinale A - A (figure 3a) et transversale B - B (figure 3b, vue partiellement arrachée) d'un autre exemple de poulie 300 selon l'invention, à ressort de torsion 302, pour alternateur réversible 12. Le ressort est disposé entre la jante 301 et le moyeu 303, autour de l'écrou central 100, la jante et le moyeu étant montés sur roulement à palier 304.

La figure 4 représente, vue en coupe longitudinale simplifiée, un autre exemple de poulie 400 à ressort hélicoïdal 402 pour alternateur réversible 14, disposé entre une jante 401 et un moyeu 403 montés sur un palier 404.

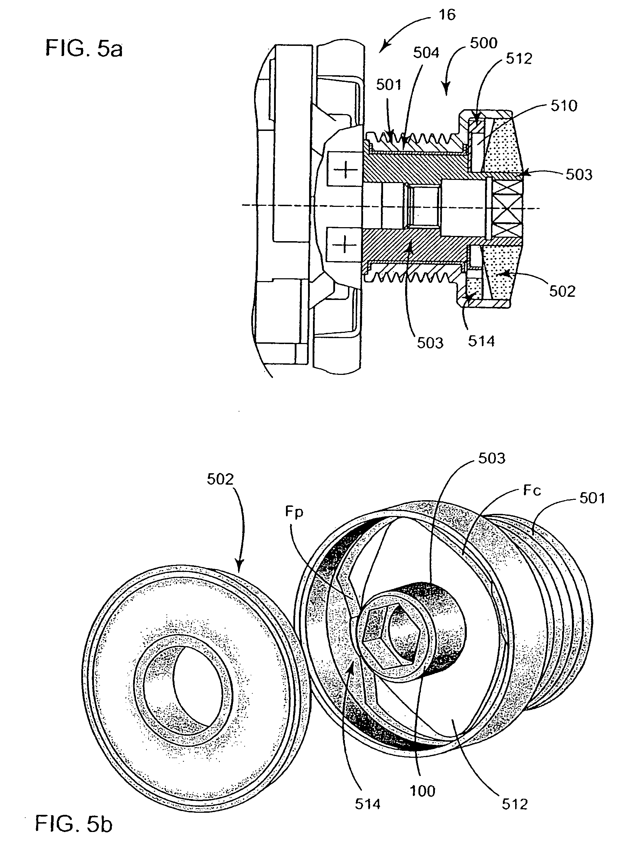

Une variante de poulie 500 selon l'invention est illustrée en coupe longitudinale et en perspective éclatée, par les figures 5a et 5b, apte à fournir deux valeurs de raideur pour un alternateur réversible 16. La poulie 500 comporte une couronne de caoutchouc 502, comme élément élastique de base disposé entre la jante 501 et le moyeu 503 monté sur l'écrou central 100, la jante et le moyeu étant séparés par un palier lisse 504.

A la raideur de base K1 fournie par la couronne de caoutchouc 502 s'additionne celle fournie par un limiteur de débattement 510, composé d'un plateau central 512 solidaire d'une face externe du moyeu central 503 et des butées élastiques 514, régulièrement disposées sur une face interne de la jante 501. Les butées et le limiteur étant conformés pour venir en contact déformant en mode démarrage. Ce limiteur apporte alors un surplus de raideur en régime démarrage pour des valeurs de couple de l'alternateur sensiblement supérieures à, par exemple, +/- 30 N.m.

En référence à la figure 5b, le plateau 512 en matériau plastique rigide est sensiblement carré, présentant des faces de contact F_{c}, et les deux butées en caoutchouc 514 sont de forme sensiblement triangulaire, présentant deux faces principales Fₚ de contact.

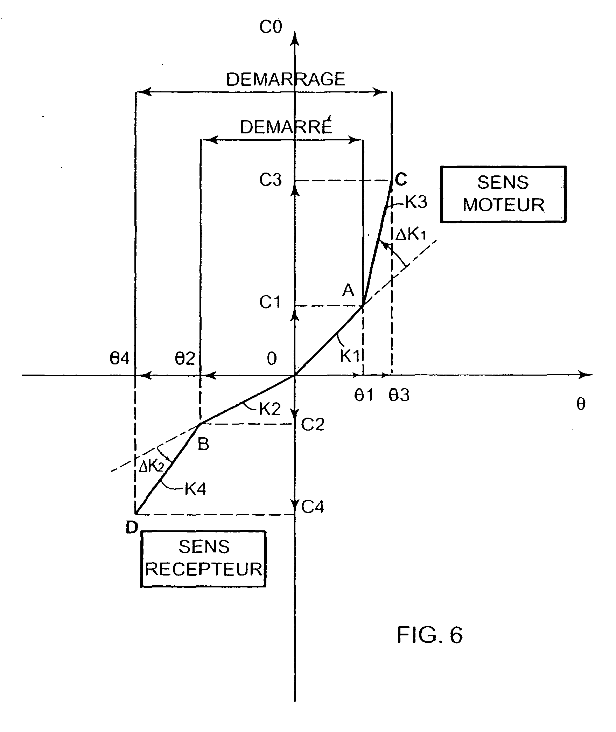

Sur la figure 6, un diagramme couple alternateur Co /déformation angulaire θ d'une poulie selon l'invention pour un alternateur réversible met en évidence les raideurs en jeu, dans le cas le plus général.

En régime de démarrage, l'alternateur tend à fournir un couple moteur pouvant aller de 0 à C3, par exemple jusqu'à 60 N.m, mais peut recevoir également un couple de 0 à C4 du fait des fluctuations décrites dans l'introduction (voir figure 16). Les déformations angulaires balayent alors toute la plage θ4-θ3, alternativement en mode moteur (positivement jusqu'à θ3) et en mode récepteur (négativement jusqu'à θ4).

Puis, en phase démarrée, le balayage est réduit à la plage des déformations de base s'étendant de θ2 à θ1, alternativement pour des couples aussi bien récepteur (de 0 à θ2) que moteur (de 0 à θ1), correspondant globalement à la plage C2-C1 (par exemple - 20 à +20 N.m).

Dans la plage des déformations de base, que ce soit en régime démarrage ou démarré, au moins un élément découpleur de base intervient et, suivant le sens du couple moteur ou récepteur, fournit des raideurs K1 (portion linéaire O-A du diagramme) et K2 (portion linéaire O-B du diagramme), K2 pouvant être égal à K1 dans le cas d'un découpleur symétrique.

Dans les plages de déformations plus étendues, θ1-θ3 et θ2-θ4, dédiées au régime de démarrage avec des couples moteur et récepteur, l'élément découpleur de base, de raideur K1 ou respectivement K2, est associé à un limiteur de débattement de raideur ΔK1 ou respectivement ΔK2, pour fournir une raideur résultante, respectivement K3 (portion A-C) et K4 (portion B-D), de valeurs absolues supérieures (par exemple de 2 à 4 N.m./degré).

Avantageusement, l'élément de base est calculé en dimension et matériau pour fournir une valeur de raideur K1 optimisée pour la phase de découplage pure.

Par exemple, la poulie 500 selon les figures 5a et 5b présente, que ce soit en modes moteur ou résistant, un même découpleur (K1 = K2) et un même limiteur de débattement (impliquant K 3 = K4).

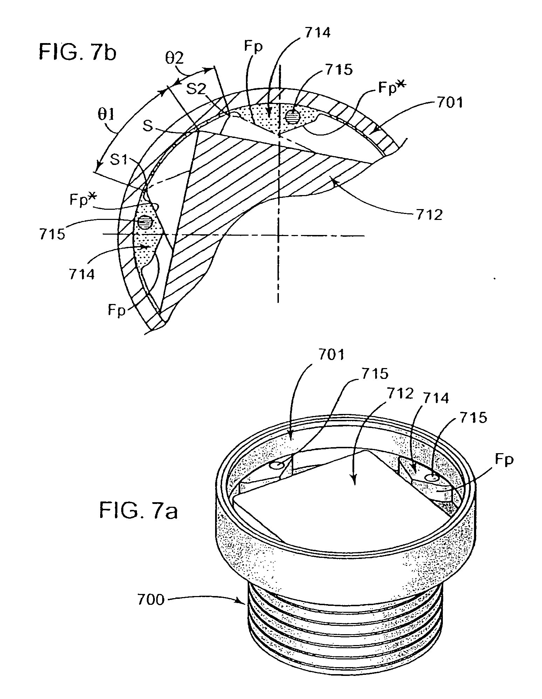

Les figures 7a à 7d présentent une variante de poulie 700 dont les raideurs sont différenciées en modes moteur et récepteur, pour le régime démarrage.

La figure 7a illustre une vue perspective dans laquelle la plateau central 712 en matériau plastique rigide reprend celui de la variante précédente (figures 5a ― 5b) avec une couronne élastique de découplage et un limiteur. Les butées élastiques 714 du limiteur, formées sur la face interne de la jante 701, reprennent également la configuration de la version précédente, mais sont cette fois armées d'un toron rigide 715 en matériau plastique. Les torons sont fixés dans un canal disposé près d'une Fp* des faces principales Fp de chaque butée.

La vue en coupe de la figure 7b montre la position du plateau 712 à l'état libre. Un sommet S du plateau dans cette position forme avec ce sommet S , déplacé en positions S1 et S2 correspondant au plateau 712 (en traits pointillés) respectivement en contact avec les faces Fp des butées 714 adjacentes, des angles de déformation θ1 et θ2.

Les angles θ1 et θ2 définissent la déformation de l'ensemble élastique de la poulie dans la transition des régimes démarrage/démarré, respectivement en mode moteur, - correspondant au contact du plateau avec la face Fp* densifiée par la proximité du toron rigide 715 -, et en mode récepteur, correspondant au contact entre le plateau et la face Fp non renforcée.

En d'autres termes, la répartition des valeurs des angles θ1 et θ2 correspond à la répartition respectives des raideurs K1 et K3 d'une part, K1 et K4 d'autre part dans chaque plage de déformation, respectivement en mode moteur et en mode récepteur.

La position du plateau à l'état libre est alors préréglée de sorte que la répartition des valeurs de déformation sont optimisées au regard des caractéristiques cinématiques de transmission de couple et de découplage du système pour chacun des régimes, démarrage et démarré, et pour chaque mode de fonctionnement, moteur et récepteur.

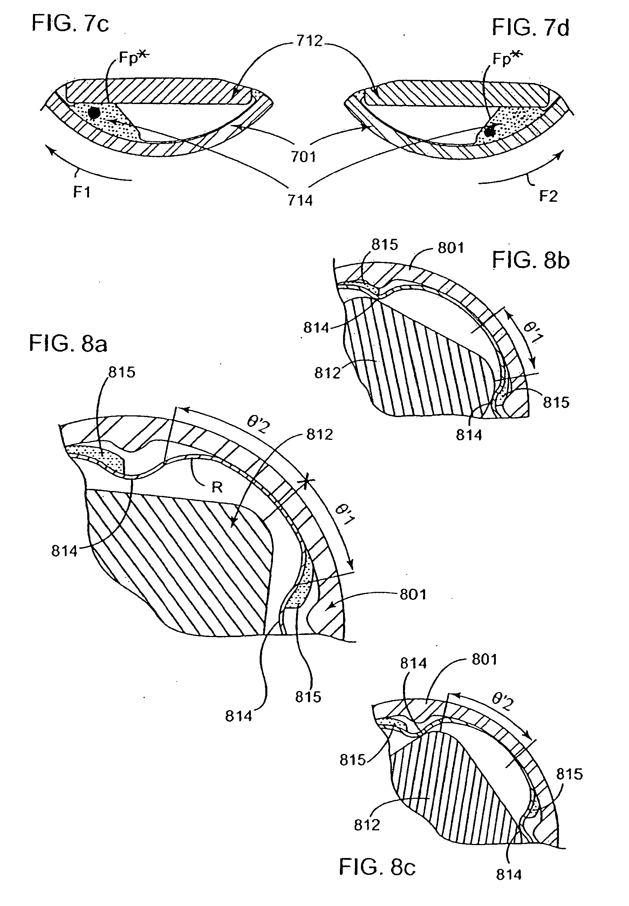

Les figures 7c et 7d montrent plus précisément la position de contact du plateau 712 au passage (par rotation selon les flèches F1 et F2) des régimes démarrage/démarré, respectivement en mode moteur (figure 7c), - avec le contact entre le plateau 712 et la face renforcée Fp* des butées 714 -, et en mode récepteur (figure 7d), - avec le contact du plateau 712 et de la face non renforcée Fp des butées 714 -.

Un autre exemple de limiteur de débattement à raideurs différenciées pour le démarrage en modes moteur et récepteur est illustré par les figures 8a à 8c. Ce limiteur se distingue du précédent par des butées périphériques élastiques formées par des avancées 814 d'un ressort à lame annulaire périphérique R, monté sur la jante 801. Une partie de ces avancées est renforcée en raideur par des languettes élastiques 815, insérées entre le ressort R et la jante 801, pour définir une raideur supérieure en mode moteur.

De plus, les angles θ'l et θ'2 sont préréglés lorsque le plateau 812 est en position libre (figure 8a) afin d'adapter, comme dans la version précédente, la répartition des déformations en fonction du régime, démarrage et démarré, au regard des caractéristiques cinématiques de transmission de couple et de découplage du système pour chacun des régimes et pour chaque mode de fonctionnement : mode moteur (figure 8b) où le plateau 812 est en contact déformant avec les parties d'avancées 814 renforcées par les languettes 815 comprimées, et mode récepteur (figure 8c), où le plateau 812 est en contact avec les portions d'avancées non renforcées.

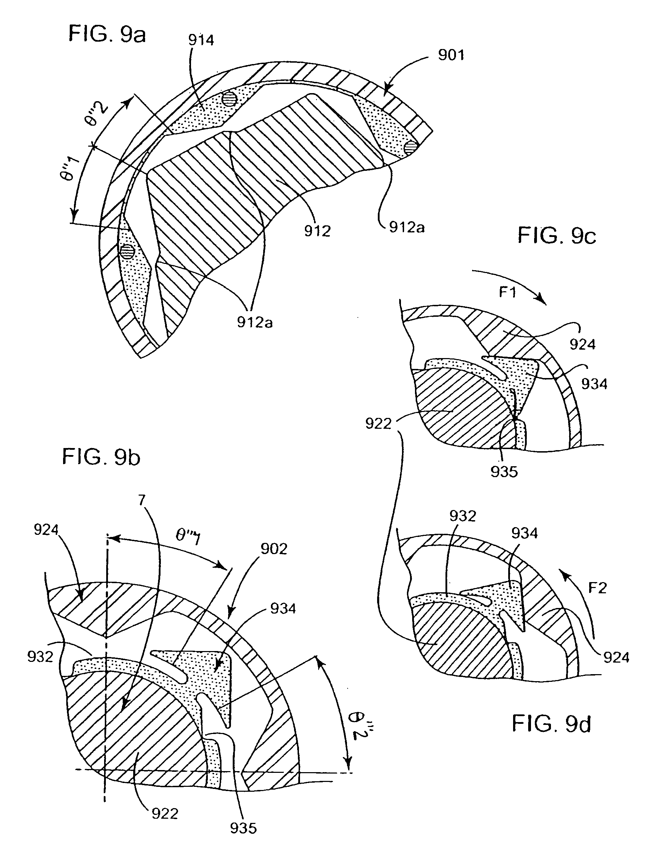

D'autres variantes de limiteur de débattement sont illustrées par les figures 9a à 9e. En référence à la figure 9a, le limiteur se compose de butées élastiques renforcées 914 sur la jante 901du type de butées illustrées par les figures 7a à 7d. Mais le plateau 912 présente une géométrie pentagonale dont les faces portent des décrochements 912a. Ces décrochements induisent une dissymétrie des débattements, respectivement θ"1 et θ''2, correspondant aux modes moteur et récepteur en régime démarrage.

En référence aux figures 9b à 9d, les butées 924 font partie intégrante de la jante 902 et sont donc rigides. L'élasticité de contact des butées avec le plateau circulaire 922 est assurée par un revêtement de caoutchouc 932 du plateau 922. Ce revêtement présente des avancées 934, en forme de « queue de vipère », et des encoches 935. Un préréglage du plateau permet de définir des angles de débattement θ"'1 et θ"'2pour les modes moteur et récepteur.

En mode moteur (rotation selon la flèche F1 en figure 9c), chaque avancée 934 pénètre dans l'encoche 935 et le contact est transmis, par l'intermédiaire de l'avancée 934, entre la butée rigide 924 et le plateau rigide 922. En mode récepteur (rotation inverse selon la flèche F2 en figure 9d), l'avancée 934 vient en contact déformant d'une part contre la butée 924 et d'autre part contre le revêtement 932, qui présente une épaisseur sensiblement supérieure à celle laissée par le creux de l'encoche 935. Dans ces conditions, les raideurs en modes récepteur et moteur sont sensiblement différenciées.

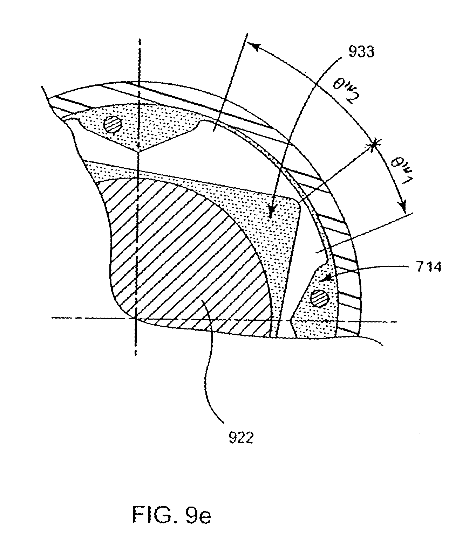

La variante présentée en figure 9e reprend les butées élastiques à toron 714 de l'exemple illustrée aux figures 7a à 7d, montées sur la jante 901. Les butées sont associées au plateau circulaire 922 revêtu d'un manchon 933 en caoutchouc présentant une forme géométrique carrée. Les angles de débattement restent réglés sur θ^{iv1} et θ^{iv}2.

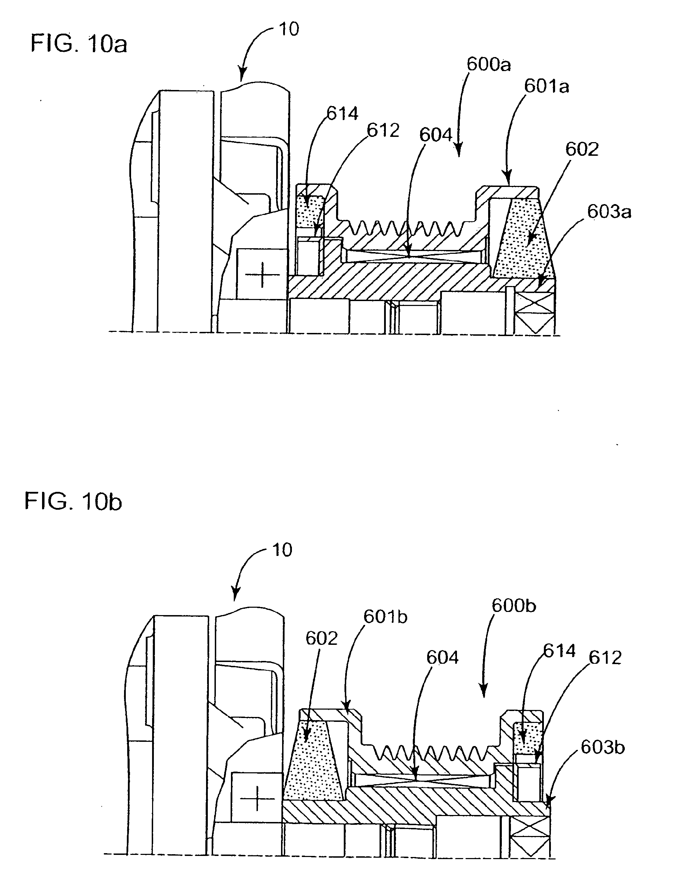

Différentes implantations de l'élément élastique de base et du limiteur de débattement, constitués par l'un des exemples précédents, sont illustrés par les figures 10a à 10d selon des vues en coupe longitudinale de poulies, référencées respectivement 600a à 600d, montées sur l'alternateur réversible 10. Les ensembles élastiques sont montés entre une jante 601 a à 601d et un moyeu, 603a à 603d, la jante et le moyeu étant assemblés sur un palier ou roulement 604, plus généralement sur tout dispositif support de charge connu. Le limiteur de débattement est formé d'un plateau 612 et de butées 614, et l'élément élastique de base d'une couronne en caoutchouc 602.

Sur les figures 10a et 10b, le limiteur de débattement 612-614 et la couronne élastique 602 sont disposés aux extrémités de la poulie, respectivement 600a et 600b.

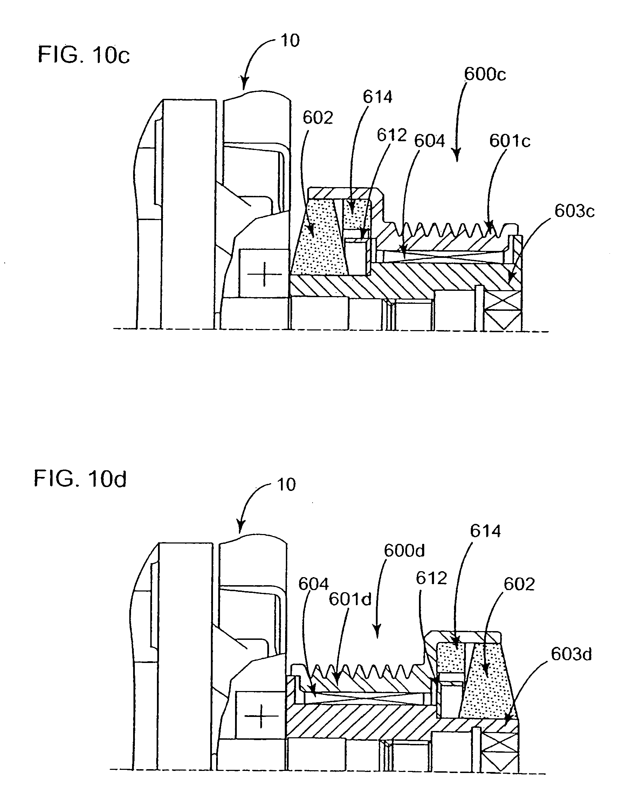

Sur les figures 10c et 10d, le limiteur 612 - 614 et la couronne 602 sont disposés côte à côte, en extrémité de poulie (respectivement du côté de l'alternateur 10 et du côté opposé à l'alternateur 10).

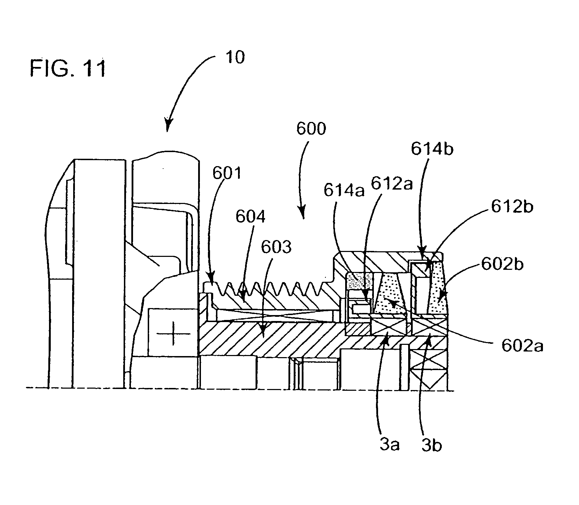

Une variante de poulie 600 pour alternateur réversible 10 est illustrée sur la vue en coupe de la figure 11. Elle se compose d'une jante 601 et d'un moyeu 603 assemblés sur le dispositif support de charge 604. La poulie comporte deux couronnes élastiques de base, 602a et 602b, associées chacune à un limiteur de débattement, respectivement 612a - 614a et 612b - 614b.

Chaque association de couronne et de limiteur est montée sur une roue libre, respectivement 3a et 3b. Les roues libres sont montées en opposition. Ainsi, une seule roue est débrayée par sens et le couple couronne - limiteur correspondant est alors inactif. L'autre roue est alors bloquée et sollicite le couple couronne - limiteur qu'elle reçoit dans ce même mode. Ainsi:
- en phase moteur, la roue 3a est bloquée et l'ensemble élastique 602a - 612a - 614a est sollicité, avec la raideur K1 de la couronne 602a en régime démarré et la raideur totale K3 de l'ensemble élastique en régime démarrage (en référence à la figure 6) ;
- en phase récepteur, la roue 3b est bloquée et l'ensemble élastique 602b - 612b - 614b est sollicité avec la raideur K2 de la couronne 602b en régime démarré et la raideur K4 de l'ensemble en régime démarrage (en référence à la figure 6).

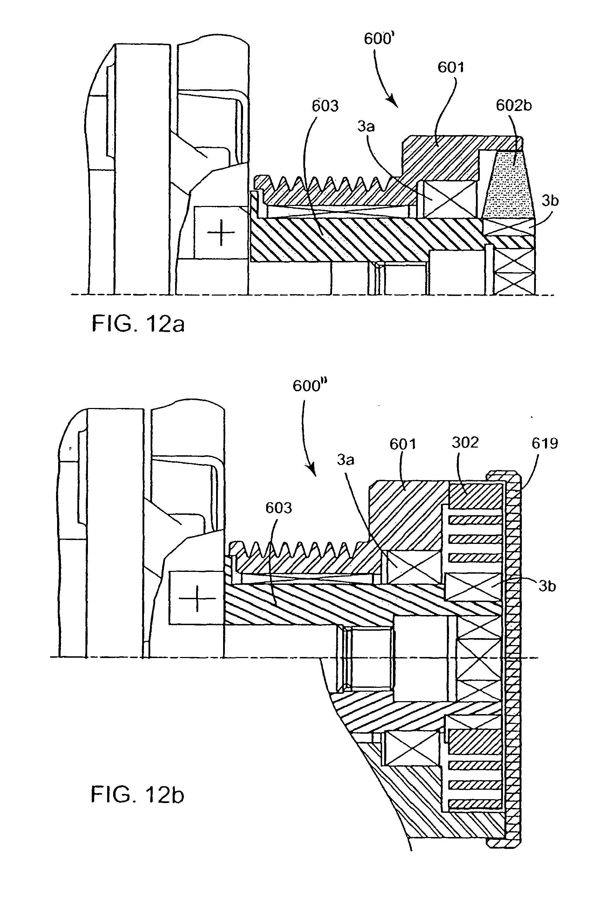

En variante selon la poulie 600' de la figure 12a, lorsque les couples sur le vilebrequin restent limités en régime démarrage et ne dépassent pas par exemple 90 N.m, la roue libre 3b ne porte que la couronne élastique 602b, sans le limiteur de débattement 612b - 614b. L'autre roue libre 3a relie directement la jante 601 au moyeu 603 sans limiteur ni couronne.

En figure 12b, la variante 600" de la poulie précédente présente un ressort de torsion 302, protégé par un flasque 619, à la place de la couronne élastique 602b.

Dans ces deux dernières variantes, les roues restent montées en opposition et l'élément élastique 302 ou 602b agit suivant le sens du couple en opposition à l'une ou l'autre des roues libres.

## Revendications

1. Alterno-démarreur séparé du vilebrequin d'un moteur thermique d'un véhicue automobile, lequel présente en régime démarré une première plage de déformations de base et en régime démarrage une deuxième plage de déformations plus étendue que la première plage de déformations de base et présentant une poulie d'organe de transmission de puissance (10, 20) par courroie (1), en régime démarrage puis en régime démarré, comportant au moins un éléments élastique de découplage (202, 302, 402, 502, 602) localisé entre un moyeu central (203, 303, 403, 503) et une jante (201, 301, 401, 501) sur laquelle se tend la courroie d'entraînement, et associé à un élément limiteur de débattement progressif (510 ; 610 ; 710) **caractérisé en ce que** le limiteur de débattement comporte deux composantes, à savoir un plateau central (512, 612, 712, 812, 912) solidaire d'une face externe du moyeu central, couplé à des butées (514, 614, 714, 814, 914) régulièrement disposées, en périphérie, sur une face interne de la jante, et dans laquelle les éléments découpleur et limiteur de débattement forment un ensemble élastique fournissant deux valeurs de raideur, que ce soit en phase moteur ou récepteur, à savoir une première valeur de base (K1, K2) de la raideur apportée par l'élément découpleur élastique actif en régime démarrage ou démarré dans une plage centrale de déformations positives et négatives pour chaque sens de couple qui correspond à ladite première plage de déformations de base et, à laquelle s'ajoute, dans des intervalles situés au-delà de ladite plage centrale, une raideur supplémentaire (Δk1, ΔK2) apportée par le limiteur de débattement, pour fournir une raideur résultante (K3, K4) de valeur absolue supérieure.

2. Alterno-démarreur selon la revendication 1, dans lequel l'élément découpleur est une couronne en élastomère (202) adhérisée directement ou par l'intermédiaire d'un insert, un ressort de torsion (302) ou un ressort hélicoïdal (402), ou l'un au moins de ces éléments associés à deux roues libres (3a, 3b) montées en opposition.

3. Alterno-démarreur selon la revendication précédente, dans lequel le matériau élastique de la couronne est un matériau de type caoutchouc, choisi parmi de la silicone, un HNBR, du chloroprène, un EPDM, un BR, un NR, et une combinaison d'au moins deux de ces composés.

4. Alterno-démarreur selon l'une des revendications précédentes, dans lequel le plateau central est en forme de polygone régulier (712), de préférence à quatre côtés, et les butées angulaires (714) sont en matériau élastique présentant deux faces principales de contact (Fp).

5. Alterno-démarreur selon l'une des revendications 1 à 3, dans lequel le plateau central est annulaire (922) et présente une couche périphérique en matériau élastique formant des avancées (933, 934) venant en contact des butées périphériques (714, 924).

6. Alterno-démarreur selon l'une des revendications 1 à 3, dans lequel les butées sont formées à partir d'un ressort à lame périphérique (R) monté sur la jante et présentant des avancées centripètes (814) régulièrement réparties.

7. Alterno-démarreur selon l'une quelconque des revendications 1 à 6, dans lequel les limiteurs de débattement sont rendus dissymétriques par la présence de butées angulaires (714, 814) et/ou d'avancées (933, 934) du plateau angulaire présentant une différence de densité, module ou de forme suivant la face de contact, de sorte que les contacts déformants obtenus selon la face (Fp, Fp*) définissent des raideurs adaptées au sens de couple correspondant en faisant intervenir une combinaison adaptée de deux raideurs spécifiques pour chaque sens de couple, obtenue par l'association de l'élément élastique spécifique de base, et du limiteur de débattement dissymétrique.

8. Alterno-démarreur selon la revendication 7, dans lequel un ensemble élastique de découplage de répartition optimisée des états de raideur correspondant aux régimes démarrage et démarré de chaque sens de couple est réalisée par le réglage de la position à l'état libre des avancées du plateau qui forme, avec chaque butée de contact correspondant au mode moteur ou récepteur de ces avancées, un angle (θ1, θ2) préréglé de seuil de changement de régime démarrage/démarré.

9. Alterno-démarreur selon la revendication 7 ou 8, dans lequel chaque butée est constituée de deux demi-butées de matériaux ayant des densités différentes.

10. Alterno-démarreur selon la revendication 8 ou 9, dans lequel chaque butée possède un toron (715) de matériau rigide ou de plus haute densité que le matériau élastique du reste de la butée, le toron étant disposé plus près d'une face de contact que de l'autre.

11. Alterno-démarreur selon la revendication 7 ou 8, dans lequel une languette en matériau élastique (815) est insérée entre la jante et une partie d'une butée en forme d'avancée d'un ressort annulaire à lame.

12. Alterno-démarreur selon l'une quelconque des revendications précédentes, dans lequel, afin de différencier également les raideurs des régimes démarrés en mode moteur et récepteur, le découplage est réalisé par deux éléments découpleurs élastiques de base de raideur différente (602a, 602b), l'un au moins de ces éléments est associé à un limiteur de débattement (612a, 614a ; 612b, 614b) adapté en raideur selon le mode et chaque association est montée sur une roue libre (3a, 3b), les deux roues libres étant en opposition de manière à définir une valeur de raideur adaptée à chaque sens.

13. Alterno-démarreur selon les revendications précédentes, **caractérisé en ce que** ladite plage des déformations de base correspond à des couples compris entre -20 N.m et +20N.m.

## Claims

1. A starter-alternator separate from the crankshaft of a motor vehicle engine, which crankshaft has, at a started speed, a first basic range of deformations, and, at a starting speed, a second range of deformations that is more extensive than the first basic range of deformations, said starter-alternator having a pulley for a member (10, 20) for transmitting power by means of a belt (1) at a starting speed and then at a started speed, the pulley including at least one resilient decoupling element (202, 302, 402, 502, 602) located between a central hub (203, 303, 403, 503) and a rim (201, 301, 401, 501) over which the drive belt is tensioned, and the resilient element is associated with a progressive deflection limiter element (510; 610; 710), the starter alternator being **characterized in that** the deflection limiter comprises two components, namely a central plate (512, 612, 712, 812, 912) secured to an outside face of the central hub, coupled to abutments (514, 614, 714, 814, 914) regularly disposed at the periphery of an inside face of the rim, and in which the decoupler element(s) and deflection limiter(s) form a resilient assembly providing two stiffness values whether in drive phase or in driven phase, namely a first basic stiffness value (K1, K2) provided by the resilient decoupler element that is active at starting speed or at started speed, in a central range of positive and negative deformations for each torque direction which corresponds to said first basic range of deformations and, to which there is added, within gaps situated beyond said central range, an additional stiffness (ΔK1, ΔK2) provided by the deflection limiter, so as to provide a resulting stiffness (K3, K4) presenting greater absolute values.

2. A starter-alternator according to claim 1, in which the decoupler element is an elastomer ring (202) bonded directly or via an insert, a torsion spring (302) or a helical spring (402), or at least one of said elements associated with two freewheels (3a, 3b) mounted in opposition.

3. A starter-alternator according to the preceding claim, in which the elastic material of the ring is a material of the rubber type selected from silicone, an HNBR, chloroprene, an EPDM, a BR, an NR, and a combination of at least two of these compounds.

4. A starter-alternator according to the preceding claim, in which the central plate is in the form of a regular polygon (712), preferably having four sides, and the angular abutments (714) are of elastic material, each presenting two main contact faces (Fp).

5. A starter-alternator according to any one of claims 1 to 3, in which the central plate (922) is annular and presents a peripheral layer of elastic material forming projections (933, 934) coming into contact with the peripheral abutments (714, 924).

6. A starter-alternator according to any one of claims 1 to 3, in which the abutments are formed from a peripheral spring blade (R) mounted on the rim and presenting inwardly-directed projections (814) that are regularly distributed.

7. A starter-alternator according to any one of claims 1 to 6, in which the defection limiters are made asymmetrical by the presence of angular abutments (714, 814) and/or projections (933, 934) from the angular plate that present differences in density, modulus, or shape between contact faces, such that the deforming contact obtained via different faces (Fp, Fp*) define stiffnesses that are adapted to the direction of the corresponding torque, by making use of an appropriate combination of two specific stiffnesses for each torque direction, obtained by associating the basic specific resilient element and the asymmetrical deflection limiter.

8. A starter-alternator according to claim 7, in which a resilient decoupling assembly with optimized distribution of stiffness states corresponding to starting conditions and to running conditions in each torque direction is obtained by adjusting the position in the rest state of the projections from the plate which, together with each contact abutment corresponding to the drive or driven mode of said projections, form a preadjusted angle (θ1, θ2) constituting the threshold for changing over between starting conditions and running conditions.

9. A starter-alternator according to claim 7 or claim 8, in which each abutment is constituted by two half-abutments of materials having different densities.

10. A starter-alternator according to claim 8 or claim 9, in which each abutment possesses a segment (715) of material that is rigid or of greater density than the elastic material constituting the remainder of the abutment, the segment being disposed closer to one of the contact faces than to the other.

11. A starter-alternator according to claim 7 or claim 8, in which a tongue of elastic material (815) is inserted between the rim and a portion of an abutment in the form of a projection from an annular spring blade.

12. A starter-alternator according to any preceding claim, in which, in order to distinguish likewise between the running stiffnesses in drive mode and in driven mode, decoupling is achieved by two basic resilient decoupler elements of different stiffnesses (602a, 602b), at least one of these elements being associated with a deflection limiter (612a, 614a; 612b, 614b) of adapted stiffness depending on the mode, and each association is mounted on a freewheel (3a, 3b), the two freewheels being in opposition so as to define a stiffness value that is adapted to each direction.

13. A starter-alternator according to any preceding claim, **characterised in that** said basic range of deformations corresponds to torques lying the range -20 N.m to +20 N.m.

## Patentansprüche

1. Start-Stopp-Anlasser, welcher von der Kurbelwelle einer Wärmekraftmaschine eines Kraftfahrzeugs separiert ist, welcher in einem angelassenen Regime einen ersten Bereich von Basisdeformationen und in einem Anlassregime einen zweiten Bereich von Deformationen, welcher ausgedehnter ist als der erste Bereich von Basisdeformationen aufweist, und eine Rolle einer Einrichtung zur Kraftübertragung (10, 20) über einen Riemen (1), in dem Anlassregime und dann in dem angelassenen Regime, aufweist, umfassend wenigstens ein elastisches Entkopplungselement (202, 302, 402, 502, 602), welches positioniert ist zwischen einer zentralen Nabe (203, 303, 403, 503) und einem Radkranz (201, 301, 401, 501), auf welchem der Antriebsriemen gespannt ist, und welches mit einem progressiven Auslenkungsbegrenzerelement (510; 610; 710) verbunden ist, **dadurch gekennzeichnet, dass** der Auslenkungsbegrenzer zwei Bestandteile umfasst, nämlich eine zentrale Platte (512, 612, 712, 812, 912), welche an einer Außenseite der zentralen Nabe befestigt ist, welche gekoppelt ist mit im Umfang regelmäßig an einer Innenseite des Radkranzes angeordneten Anschlägen (514, 614, 714, 814, 914), und in welcher die Entkopplungs- und Auslenkungsbegrenzerelemente eine elastische Gesamtheit bilden, welche zwei Steifigkeitswerte bereitstellt, sei es in einer antreibenden oder einer angetriebenen Phase, nämlich einen ersten Basiswert (K1, K2) der Steifigkeit, welcher erbracht wird durch das aktive elastische Entkopplungselement in dem Anlassregime oder angelassenen Regime in einem zentralen Bereich von positiven und negativen Deformationen für jede Drehmomentrichtung, was dem ersten Bereich von Basisdeformationen entspricht, und an welchen sich in jenseits des zentralen Bereichs angeordneten Intervallen eine zusätzliche Steifigkeit (ΔK1, ΔK2) anfügt, welche durch den Auslenkungsbegrenzer erbracht wird, um eine resultierende Steifigkeit (K3, K4) mit höherem Absolutwert bereitzustellen.

2. Start-Stopp-Anlasser nach Anspruch 1, wobei das Entkopplungselement ein Kranz aus einem Elastomer (202), welcher direkt oder über einen Einsatz angehaftet ist, eine Torsionsfeder (302) oder eine Spiralfeder (402) oder wenigstens eines dieser Elemente verbunden mit zwei gegenüberliegend angebrachten freien Rädern (3a, 3b) ist.

3. Start-Stopp-Anlasser nach dem vorhergehenden Anspruch, wobei das elastische Material des Kranzes ein Material vom Kautschuktyp ist, welches ausgewählt ist aus Silikon, einem HNBR, Chloropren, einem EPDM, einem BR, einem NR und einer Kombination von wenigstens zwei dieser Verbindungen.

4. Start-Stopp-Anlasser nach einem der vorhergehenden Ansprüche, wobei die zentrale Platte in Form eines regelmäßigen Polygons (712), vorzugsweise mit vier Seiten, ist und die winkeligen Anschläge (714) aus einem elastischen Material, welches zwei Hauptkontaktflächen (Fₚ) aufweist, sind.

5. Start-Stopp-Anlasser nach einem der Ansprüche 1-3, wobei die zentrale Platte ringförmig (922) ist und eine Umfangsschicht aus einem elastischen Material aufweist, welche Vorsprünge (933, 934) ausbildet, welche in Kontakt mit Umfangsanschlägen (714, 924) kommen.

6. Start-Stopp-Anlasser nach einem der Ansprüche 1-3, wobei die Anschläge ausgebildet sind ausgehend von einer Umfangsblattfeder (R), welche an dem Radkranz angebracht ist und regelmäßig verteilte zentripetale Vorsprünge (814) aufweist.

7. Start-Stopp-Anlasser nach einem der Ansprüche 1-6, wobei die Auslenkungsbegrenzer durch das Vorhandensein von winkeligen Anschlägen (714, 814) asymmetrisch gemacht sind und/oder Vorsprünge (933, 934) der ringförmigen Platte einen Unterschied in Dichte, Modul oder Form entlang der Kontaktfläche aufweisen, sodass die gemäß der Fläche (Fₚ, F_{p*}) erhaltenen Kontakte Steifigkeiten definieren, welche an die entsprechende Drehmomentrichtung angepasst sind, wobei eine angepasste Kombination von zwei spezifischen Steifigkeiten für jede Drehmomentrichtung zum Einsatz gebracht wird, welche durch die Verbindung des spezifischen elastischen Basiselements und des asymmetrischen Auslenkungsbegrenzers erhalten wird.

8. Start-Stopp-Anlasser nach Anspruch 7, wobei eine elastische Entkopplungsanordnung mit optimierter Verteilung von Steifigkeitszuständen entsprechend dem Anlassregime und angelassenen Regime für jede Drehmomentrichtung realisiert ist durch die Regelung der Position der Vorsprünge der Platte im freien Zustand, welche mit dem entsprechenden Kontaktanschlag im antreibenden Modus oder angetriebenen Modus dieser Vorsprünge einen voreingestellten Schwellwinkel (Θ1, Θ2) zum Wechsel des Anlassregimes/angelassenen Regimes bildet.

9. Start-Stopp-Anlasser nach Anspruch 7 oder 8, wobei jeder Anschlag gebildet ist durch zwei Halbanschläge aus Materialien, welche unterschiedliche Dichten aufweisen.

10. Start-Stopp-Anlasser nach Anspruch 8 oder 9, wobei jeder Anschlag eine Litze (715) aus einem starren Material oder mit einer höheren Dichte als das elastische Material des Rests des Anschlags aufweist, wobei die Litze näher an einer Kontaktfläche als an der anderen angeordnet ist.

11. Start-Stopp-Anlasser nach Anspruch 7 oder 8, wobei eine Zunge aus einem elastischen Material (815) zwischen den Radkranz und einen Teil eines Anschlags in Form eines Vorsprungs einer ringförmigen Blattfeder eingefügt ist.

12. Start-Stopp-Anlasser nach einem der vorhergehenden Ansprüche, wobei, um auch die Steifigkeiten der angelassenen Regimes im antreibenden und angetriebenen Modus zu differenzieren, die Entkopplung realisiert ist über zwei elastische Basisentkopplungselemente mit unterschiedlicher Steifigkeit (602a, 602b), wobei wenigstens eines dieser Elemente mit einem Auslenkungsbegrenzer (612a, 614a; 612b, 614b) verbunden ist, dessen Steifigkeit gemäß dem Modus angepasst ist, und jeder Verbund an einem freien Rad (3a, 3b) angebracht ist, wobei die zwei freien Räder auf solche Weise gegenüberliegend sind, dass ein an jede Richtung angepasster Steifigkeitswert definiert wird.

13. Start-Stopp-Anlasser nach den vorhergehenden Ansprüchen, **dadurch gekennzeichnet, dass** der Bereich von Basisverformungen Drehmomenten entspricht, welche zwischen -20 Nm und +20 Nm enthalten sind.
